# EUROPEAN PATENT APPLICATION

(11) **EP 4 019 852 A1**
(43) Date of publication of application: **29.06.2022**
(21) Application number: 20217193.0
(22) Date of filing: 24.12.2020
(51) Int. Cl.: F24C 15/32

(54) **STEAM COOKING APPARATUS**

(71) Applicant: Koninklijke Philips N.V., 5656 AG Eindhoven (NL)
(72) Inventor: MURBACHER, Werner Karl, 5656 AE Eindhoven (NL)
(74) Representative: de Vries, Janna

(57) **Abstract**

A cooking apparatus has a cooking chamber and a heating chamber adjacent the cooking chamber used for heating air laden with steam. A fan is mounted in the heating chamber and it circulates the air and steam between the cooking chamber and the heating chamber, through a vent arrangement. An additional drainage outlet is provided at a base of the heating chamber and for example leads to the cooking chamber. This is used to allow liquid such as condensate to flow from the heating chamber for example to the cooking chamber, for example to enable easy removal of residue formed during a cleaning process.

## Description

### FIELD OF THE INVENTION

This invention relates to a steam cooker, also referred to as a steamer.

### BACKGROUND OF THE INVENTION

Steam cooking (also referred to as steaming) is commonly known as one of the healthiest cooking methods. In particular, steam cooking is often preferred over other cooking methods such as boiling, frying and baking because it results in a lower amount of nutrient destruction.

This is because steam cooking generally operates at a lower temperature, typically below 100 degrees Celsius, but nevertheless enables short cooking times due to the wet steam environment. The presence of water as the cooking medium causes a leaching out of water soluble nutrients when boiling, and this is greatly reduced by steam cooking.

A traditional steamer comprises a pan for placing over the hob of a cooker, in which water is boiled. Food to be steamed is mounted over the pan in trays having perforated bases.

Steam cookers are now well known and comprise a steam cooking chamber around which hot air and steam are circulated by a fan. The steam cooker is for example a top-loaded device, rather than a more conventional steam oven with a front door.

Steam is introduced into the cooking chamber, either from an external steam source or else generated internally within the cooking chamber for example by using a vaporizer at the bottom of the cooking chamber. A heating chamber adjacent to the cooking chamber comprises a fan and a heater to generate a circulatory flow of hot air and steam. The steam generation may take place in the heating chamber instead of in the cooking chamber.

The heating chamber is a closed unit next to the main cooking chamber, but it has at least one opening for air intake from the cooking chamber and at least one opening for air delivery into the cooking chamber.

During cooking, residues deposit in the heating chamber, at the heater and fan. The user does not have access to clean the heating chamber and enclosed components. As a result, after a while, residues in the heating chamber downgrade the cooking performance and generate bad smells and deteriorated taste.

For safety-reasons, the user should not fill the cooking chamber, and hence also the heating chamber with water. Instead, a special cleaning mode is provided to enable safe cleaning of the steam cooker.

The cleaning mode involves providing a cleaning fluid in the cooking chamber, and circulating the cleaning fluid, entrained in a heated flow of steam and air, around the cooking chamber and the heating chamber. Residue at the end of the cleaning process can be removed by cleaning the cooking chamber.

There is easy access to the main cooking chamber for cleaning, whereas the heating chamber can only be cleaned by the cleaning mode. This means that cleaning of the heating chamber is less effective and has to rely on the cleaning mode.

There is a need for a steam cooker which addresses this issue.

### SUMMARY OF THE INVENTION

The invention is defined by the claims.

According to examples in accordance with an aspect of the invention, there is provided a steam cooking apparatus, comprising:
a cooking chamber;
a steam generator for generating steam to be provided to the cooking chamber;
a heating chamber adjacent the cooking chamber;
a heating arrangement located within the heating chamber for heating air laden with steam;
a vent arrangement between the cooking chamber and the heating chamber to allow a circulatory flow of steam laden air between the heating chamber and the cooking chamber; and
a drainage outlet at a base of the heating chamber.

The drainage outlet is additional to the vent arrangement, so that it does form part of the main circulatory air flow around the cooking chamber. Instead, it is used to enable condensate to flow from the heating chamber so that it does not remain in the heating chamber. This condensate is for example created by a cleaning mode, and may thus have entrained cleaning debris. By allowing the flow to a drainage outlet, that debris can be more easily removed.

The drainage outlet for example leads to the cooking chamber. Thus, the cleaning of the cooking chamber (e.g. by wiping) removes debris which has flowed through the drainage outlet, for example during cleaning of the heating chamber.

During cooking, the airflow may guide some condensate from the heating chamber to the cooking chamber and after cooking condensate with debris is also able to flow from the heating chamber to the cooking chamber through the drainage outlet to prevent condensate remaining in the heating chamber.

The apparatus for example comprises a fan for generating the circulatory flow, and the fan is for example in the heating chamber.

The air flow around the cooking chamber is defined by the characteristics of the circulation system including a fan motor speed and fan dimensions.

The cooking chamber for example has a base comprising a well area and a central raised area, wherein the drainage outlet communicates with the well area. In this way, collected residue, for example at the end of a cleaning cycle, can easily be removed.

A separation wall for example separates the cooking chamber and the heating chamber, and the vent arrangement comprises an extraction vent in the separation wall through which air is drawn from inside the cooking chamber, and a delivery vent for delivering air to the cooking chamber. Thus, there is a circulatory flow around the heating chamber and the cooking chamber through the two vents. The drainage outlet will also allow steam and air to flow during the circulation, but the overall flow is dominated by the delivery vent and the extraction vent.

The drainage outlet for example has an area which is less than the area of each of the delivery vent and the extraction vent, for example an area less than 50%, or less than 25% or less than 10%, or less than 5% of the area of each of the delivery vent and the extraction vent.

The drainage outlet is intended for providing a flow of liquid which has collected in the heating chamber. However, the flow direction through the drainage outlet which is induced by the circulatory flow is in the direction towards the cooking chamber, and hence this flow assists the flow of collected liquid to the cooking chamber. The drainage outlet is for example located at a base of the separation wall.

The extraction vent is for example located in a middle region of the separation wall, the apparatus comprises a fan in the heating chamber, and the extraction vent leads directly to the fan. The delivery vent is for example located at a top region of the separation wall above the extraction vent.

By providing the delivery vent at the top of the separation wall, above the extraction vent, a circulatory flow is generated which passes along a top of the cooking chamber (i.e. under a lid of the apparatus). In this way, the lid is heated with a continuous flow, thereby reducing condensation on the lid to prevent steaming up of the viewing window formed by the transparent lid.

The cooking chamber for example comprises a base, a rear wall area, first and second opposing side wall areas and a front wall area, and the separation wall is formed by the rear wall area. The apparatus preferably further comprises a transparent lid.

The term "transparent lid" should be understood as meaning the whole lid if it is entirely transparent, or just the transparent portion if the lid has a transparent window and a significant non-transparent frame. The transparent lid enables inspection of the food during cooking.

The transparent lid is for example inclined downwardly from the rear wall area towards the front wall area. The aim of the design is to prevent condensation of steam at the transparent section of the lid via heating. The transparent lid is preferably openable and is thus used both for inserting and removing food and for inspection during cooking.

The steam generator for example comprises a water reservoir and a steam heater for heating water to generate steam, and the apparatus comprises a controller adapted to control the steam heater to heat water to create steam. The cooking apparatus preferably further comprises a water dosing system for delivering water to the steam heater. A continuous or pulsed delivery of water and a cyclic control of the heating arrangement may for example be used to maintain a cooking temperature in a desired range. A feed arrangement is for example provided to feed water from a water reservoir into contact with a heated surface of the steam heater. This surface is then used to induce evaporation.

The apparatus for example comprises a controller which is adapted to implement:
a steam cooking mode; and
a cleaning mode, wherein the cleaning mode is for circulating a cleaning fluid between the cooking chamber and the heating chamber.

The cleaning mode provides cleaning of the cooking chamber as well as the heating chamber, by circulating the cleaning fluid around both chambers.

The controller for example implements the cleaning mode by controlling the cooking chamber temperature and the air flow for a predetermined duration.

In the cleaning mode, the cooking chamber temperature is for example controlled to be in the range 90 degrees Celsius to 100 degrees Celsius (for example 100 degrees Celsius) at a maximum steam generation rate of the apparatus and for a time period in the range 10 to 30 minutes.

Thus the cleaning fluid is entrained in steam which is generated at a maximum rate. The maximum steam generation for example comprises vaporization of at least 3g of water per minute, for example 5 g/minute.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a first example of a cooking apparatus;
Figure 2 shows the cooking chamber opened up to show the rear wall area and the first and second side wall areas;
Figure 3 shows a simplified diagram of the cooking apparatus to show the flow paths;
Figure 4 shows a second example of a cooking apparatus; and
Figure 5 shows a third example of a cooking apparatus.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a cooking apparatus for cooking using steam. There is a cooking chamber and a heating chamber adjacent the cooking chamber used for heating air laden with steam. A fan is mounted in the heating chamber and it circulates the air and steam between the cooking chamber and the heating chamber, through a vent arrangement. An additional drainage outlet is provided at a base of the heating chamber and for example leads to the cooking chamber. This is used to allow liquid such as condensate to flow from the heating chamber for example to the cooking chamber, to enable easy removal of residue formed during a cleaning process.

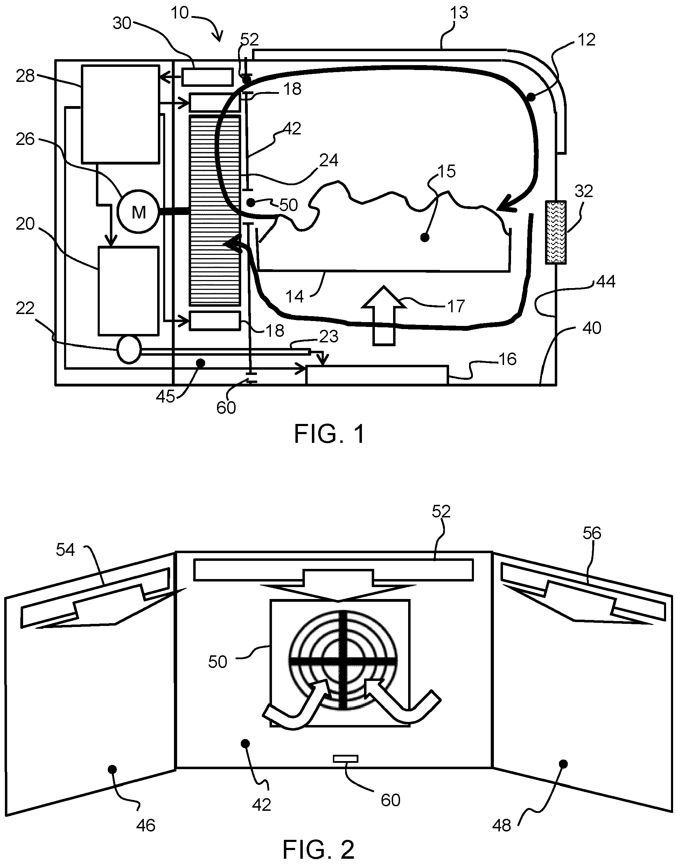

Figure 1 shows a known cooking apparatus 10, in particular as disclosed in WO 2020/148187, as well as a modification in accordance with this invention.

The cooking apparatus comprising a cooking chamber 12 (i.e. a food chamber in which food to be cooked is placed) in which a food basket 14 is mounted. The cooking chamber has a viewing window 13 which may also be the openable lid of the apparatus. Food 15 to be cooked is placed on the food basket which then places the food near the center of the cooking chamber. The food basket has air permeable side walls and optionally an air permeable base so that air and steam can circulate through the basket to the food.

There is a heating arrangement which in this example comprises a first heater 16 for heating water to generate steam, and a second heater 18 for heating air laden with steam. The first heater is used to generate steam (shown as arrow 17) from water which is delivered from a water reservoir 20 by a dosing system 22. The dosing system provides water to a feed arrangement 23 which delivers water to a surface of the first heater 16 to generate steam.

The dosing system may deliver a constant flow of water during cooking or a regularly pulsed delivery of water (so needing no feedback control), but it could also be controlled dynamically during cooking using feedback from a humidity sensor.

A circulation system is provided in the form of a fan 24 and motor 26. The circulation system circulates the steam generated by the first heater 16 around the cooking chamber. The second heater 18 is along the circulation path and thereby further heats the steam to create a high temperature dry steam environment. The circulation system thus moves the saturated air inside the chamber to the food to increase convection and also assists in producing a homogeneous temperature field of all parts inside the cooking chamber, including the viewing window. This is to avoid condensation.

The apparatus is controlled by a controller 28, which controls the heating arrangement 16, 18 and optionally also the dosing system 22. The controller receives temperature information from a temperature sensor 30. The temperature of interest is the temperature at the center of the cooking chamber, where the food is located. However, the temperature sensor, which may be a negative temperature coefficient (NTC) temperature sensor, may be located anywhere in the cooking chamber, with a known correlation between the temperature at the sensor location and the temperature in the middle of the chamber.

The temperature is for example regulated by switching on and off the second heater 18 of the heating arrangement by the controller. The temperature of the first heater, for steam generation, is regulated by a thermostat again by cycling on and off. These two control mechanisms may be independent.

The cooking chamber is vented to the ambient surroundings by vents 32. Thus, the cooking chamber remains at substantially atmospheric pressure during use.

The controller 28 controls the heating arrangement to heat water from the water reservoir to create steam using the first heater 16, and to further heat the steam to create heated steam at a temperature around 100 degrees.

The second heater may further heat the steam for example to 120 degrees Celsius, or in the range 110 to 120 degrees Celsius. This approach is explained in WO 2020/0099339. Higher temperatures up to 200 degrees Celsius could be considered as well.

The circulation system circulates the heated steam around the cooking chamber. The vent or vents of the cooking chamber maintain the pressure at ambient pressure, and thus steam can escape when the maximum possible absolute humidity is reached (for the particular operating temperature), which would otherwise result in an increase in pressure.

The release mechanism provided by the vent or vents means that the steam delivery rate does not need to be controlled, and instead there can be a preset water delivery rate to the first heater 16. The controller may for example implement a control sequence which determines particular points of time when steam generation starts and/or ends. By way of example, a time-delayed start may be used for steam generation. The device is for example in a waiting mode for certain time e.g. 2 minutes from the start or else waiting until the cooking chamber temperature reaches 100 degrees Celsius. Water is then added to the first water heater 16. This pre-heating improves the avoidance of condensation at the window of the transparent lid as discussed below. The device could also have an operation mode without any steam generation.

The cooking chamber 12 comprises a base 40, a rear wall area, first and second opposing side wall areas and a front wall area 44. These together define a closed chamber. The rear wall area defines a separation wall 42 which separates the cooking chamber 12 from a heating chamber 45 in which (at least) the fan blades 24 and second heater 18 are housed.

Note that the term wall "area" is used because the shape (from above) may not be a polygon, but instead may be a more curved shaped thus not having precisely defined sides, front and back. However, the shape (from above) is generally square or rectangular, so that corresponding front, back and sides may be readily identified. However, this does not imply that other shapes are not possible. Even a circle may be considered to have sides, a front and back by dividing it into quadrants.

In the example shown, the motor 26, water reservoir 20, dosing system 22, and controller 28 are in a further chamber which is isolated from the heating chamber (i.e. there is no gas or liquid passage between them). However, there may be different components in the different chambers.

Figure 2 shows the cooking chamber opened up to show the rear wall area and the first and second side wall areas 46, 48 to show one example of vent arrangement.

The circulation system draws air out of the cooking chamber through an extraction vent 50 in the rear wall area. This vent leads to the fan blades.

A delivery vent arrangement for delivering air (and steam) comprises a first delivery vent 52 at a top region of the separation wall 42 above the extraction vent 50. It may extend across at least half of the width of the separation wall, such as across more than 60%, 70% or 80% of that width.

In this example, a second delivery vent 54 is at a top region of the first side wall area 46 and a third delivery vent 56 is at a top region of the second side wall area 48. Many more examples of possible vent designs are described in WO 2020/148187.

In this known design, these vents are the only entry points for air/steam driven by the circulation system. Thus, it is possible through design of the vents and fan to control the circulation of air and steam within the cooking chamber in a reliable and repeatable way.

It does mean, however, that any debris which has collected in the heating chamber is trapped, and can only be transported to the cooking chamber if entrained in the steam and air flow.

The arrangement of vents shown enables a flow of the delivered air to pass over the full area of the underside of the lid 13. The viewing window area of the lid 13 has increased heat losses compared to an insulated wall so it is desirable for the window to be exposed to the flow created by the circulation system to maintain the viewing window above the dew point.

To the extent described above, the steam cooking apparatus is as described in WO 2020/148187.

The invention is directed to the problem of enabling adequate cleaning of the heating chamber.

The invention provides a drainage outlet 60 (below simply referred to as the "outlet") at a base of the heating chamber. In one example, it leads to the cooking chamber. It is located at the base of the separation wall. It may be flush with the base of the cooking chamber, so that the bottom of the outlet is at exactly the same level as the bottom of the base of the cooking chamber. A small step is also possible for example to prevent flow back to the heating chamber. The outlet 60 is shown in Figures 1 and 2.

The outlet 60 is additional to the vent arrangement 50, 52, 54, 56, so that it does form part of the main circulatory air flow around the cooking chamber. Instead, it is used to enable condensate to flow from the heating chamber 45 to the cooking chamber 12 . This condensate is for example created by a cleaning mode, and may thus have entrained cleaning debris. By allowing the flow to the cooking chamber, that debris can be more easily removed.

The outlet 60 for example has an area which is less than the area of each of the delivery vent 50 and the extraction vent (i.e. the combination of the areas of 52, 54, 56 in this example), for example an area less than 50%, or less than 25% or less than 10% or less than 5% of the (combined effective) area of each of the delivery vent and the extraction vent.

Thus, the outlet does not have a large influence on the air flow conditions.

In this way, the outlet 60 does not significantly alter the steam and air flow characteristics during normal cooking. Instead, the outlet 60 is intended for providing a flow of liquid which has collected in the heating chamber 45.

When operating the fan, the flow direction through the outlet 60 will however be the direction towards the cooking chamber 12, and hence this flow assists the flow of collected liquid from the heating chamber 45 to the cooking chamber 12. Thus, the bottom of the outlet 60 may be spaced by a small amount above the base, e.g. 3mm or less since the air flow can carry any collected liquid over the step.

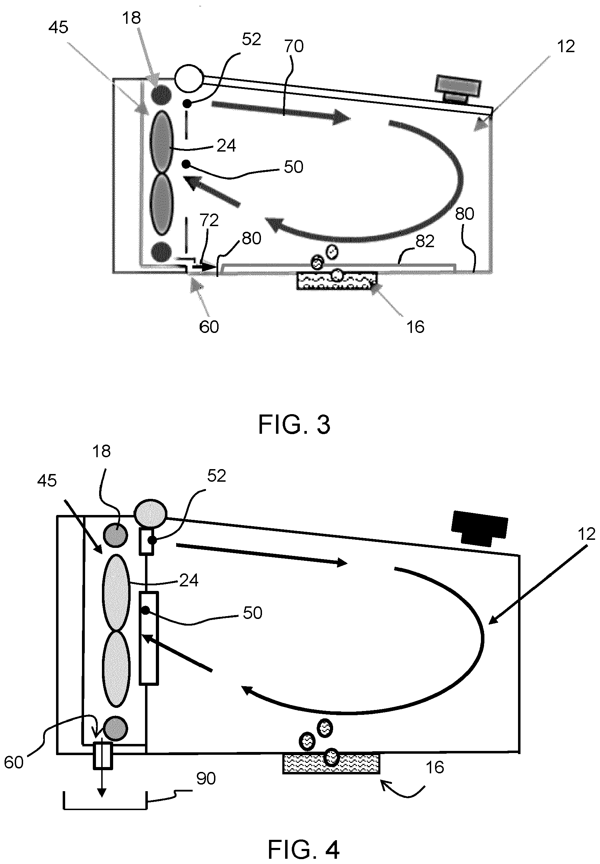

Figure 3 shows a simplified diagram of the cooking apparatus to show the flow paths.

It shows the cooking chamber 12, heating chamber 45, the first heater 16, second heater 18 and the outlet 60.

The main circulatory flow is shown as 70 and the liquid flow for emptying the heating chamber 45 is shown as 72.

Figure 3 also shows that the base of the cooking chamber 12 has a well area 80 and a central raised area 82. The outlet 60 communicates with the well area 80. In this way collected residue, for example at the end of a cleaning cycle, can easily be removed by only wiping the well area 80.

Figure 3 also shows that the lid is inclined downwardly from the rear wall to the front wall. This assists in preventing condensation of steam at the transparent section of the lid via heating.

The controller of the cooking apparatus is preferably adapted to implement a normal steam cooking mode and a different cleaning mode. The two modes are then optimized for their particular purposes. In particular, the rate of generating steam, the fan speed and the temperature may be set to optimize the performance.

The cleaning mode is for example for circulating a cleaning fluid between the cooking chamber and the heating chamber.

The preferred cleaning fluid is water but it is also possible to add detergents for example an alkaline cleaning fluid or descaling agents to the water reservoir. Alternatively, agents can initially be added to the surface of the first heater 16.

It is preferred that accessories of the steam cooking device, such as a food basket 14 or others are removed as they can be cleaned in a dishwasher. Alternatively accessories may remain in the chamber during the cleaning mode.

The cleaning mode provides cleaning of the cooking chamber as well as the heating chamber, by circulating the cleaning fluid around both chambers.

In the cleaning mode, the cooking chamber temperature is for example controlled to be in the range 90 degrees Celsius to 100 degrees Celsius, such as at 100 degrees Celsius and with a maximum steam generation rate of the apparatus. Thus the cleaning fluid is entrained in steam which is generated at a maximum rate.

The maximum steam generation for example comprises vaporization of at least 3g of water per minute, for example 5 g/minute. As mentioned above, the steam generation rate is controlled by controlling this dosing rate to the first heater.

The cleaning mode for examples lasts for a time period in the range 10 to 30 minutes such as 20 minutes.

In the examples above, the outlet 60 leads to the cooking chamber. Figure 4 shows a first alternative design in which the drainage outlet 90 instead leads to a separate collection chamber 90 outside the cooking chamber. This collection chamber can then easily be cleaned.

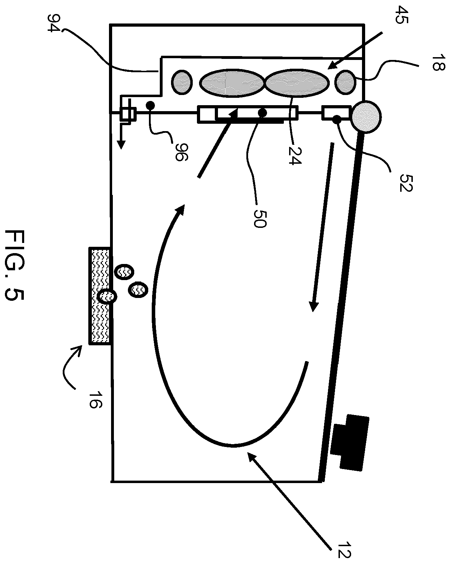

In the example of Figure 1, the base of the heating chamber 45 is level with the base of the cooking chamber. Figure 5 shows an example in which the base 94 of the heating chamber is higher than the base of the cooking chamber 12. A tube 96 provides a coupling from the heating chamber to the cooking chamber. Instead of a separate tube, the outlet may simply open to a position in the separation wall above the base of the cooking chamber so that no additional coupling (such as a tube) is needed.

The examples above make use of a heater for generating steam within the cooking chamber, However, the steam generation may instead take place in the heating chamber, or the steam generation may be external to the main body of the steam cooker, with steam delivered by a delivery tube.

The examples above also show a fan in the heating chamber. The fan may instead be in the cooking chamber, or alternative methods may be used for generating the desired circulatory flow so that the heater steam laden air circulates around the cooking chamber.

The examples above schematically represent a radial fan. The fan may instead be a tangential fan or indeed any other system for generating an airflow.

As discussed above, embodiments make use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A steam cooking apparatus (10), comprising:
a cooking chamber (12);
a steam generator for generating steam to be provided to the cooking chamber (12);
a heating chamber (45) adjacent the cooking chamber;
a heating arrangement (18) located within the heating chamber (45) for heating air laden with steam;
a vent arrangement (50,52,54,56) between the cooking chamber (12) and the heating chamber (45) to allow a circulatory flow of steam laden air between the heating chamber and the cooking chamber; and
a drainage outlet (60) at a base of the heating chamber.

2. The apparatus of claim 1, wherein the drainage outlet leads to the cooking chamber.

3. The apparatus of claim 2, wherein the cooking chamber has a base (40) comprising a well area (80) and a central raised area (82), wherein the drainage outlet communicates with the well area.

4. The apparatus of any one of claims 1 to 3, wherein a separation wall (42) separates the cooking chamber and the heating chamber, and wherein the vent arrangement comprises an extraction vent (50) in the separation wall through which air is drawn from inside the cooking chamber, and a delivery vent (52) for delivering air to the cooking chamber.

5. The apparatus of claim 4, wherein the drainage outlet (60) is located at a base of the separation wall (42).

6. The apparatus of claim 5, wherein the extraction vent (50) is located in a middle region of the separation wall, wherein the apparatus comprises a fan in the heating chamber, and wherein the extraction vent leads directly to the fan (24).

7. The apparatus of claim 6, wherein the delivery vent (52) is located at a top region of the separation wall (42) above the extraction vent (50).

8. The apparatus of any one of claims 1 to 7, wherein the cooking chamber (12) comprises a base (40), a rear wall area and a front wall area (44), wherein the separation wall (42) is formed by the rear wall area.

9. The apparatus of any one of claims 1 to 8, further comprising a transparent lid, wherein the transparent lid is inclined downwardly from the rear wall area towards the front wall area.

10. The apparatus of any one of claims 1 to 9, wherein the steam generator comprises a water reservoir and a steam heater for heating water to generate steam, and the apparatus comprises a controller (28) adapted to control the steam heater to heat water from the water reservoir to create steam.

11. The apparatus of claim 10, further comprising a water dosing system (22) for delivering water to the steam heater.

12. The apparatus of any one of claims 1 to 11 comprising a controller which is adapted to implement:
a steam cooking mode; and
a cleaning mode, wherein the cleaning mode is for circulating a cleaning fluid between the cooking chamber and the heating chamber.

13. The apparatus of claim 12, wherein the controller is adapted to implement the cleaning mode by:
controlling the cooking chamber temperature and the air flow for a predetermined duration.

14. The apparatus of claim 13, wherein in the cleaning mode, the cooking chamber temperature is controlled to be in the range 90 degrees Celsius to 100 degrees Celsius at maximum steam generation rate for a time period in the range 10 to 30 minutes.

15. The apparatus of claim 14, wherein the maximum steam generation comprises vaporization of at least 3g of water per minute for example 5 g/minute.
